(19) Europäisches Patentamt
European Patent Office
Office européen des brevets

(11) **EP 4 113 983 A1**

(12) **EUROPEAN PATENT APPLICATION**

(43) Date of publication:
**04.01.2023 Bulletin 2023/01**

(21) Application number: **21182818.1**

(22) Date of filing: **30.06.2021**

(51) International Patent Classification (IPC):
***H04N 7/14*** *(2006.01)*

(52) Cooperative Patent Classification (CPC):
**H04N 7/147**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Eyeware Tech SA**
**1920 Martigny (CH)**

(72) Inventors:
• **Funes Mora, Kenneth Alberto**
  **1018 Lausanne (CH)**
• **Sawatzky, Johann**
  **6340 Baar (CH)**

(74) Representative: **P&TS SA (AG, Ltd.)**
**Avenue J.-J. Rousseau 4**
**P.O. Box 2848**
**2001 Neuchâtel (CH)**

(54) **METHOD FOR GAZE TRACKING CALIBRATION WITH A VIDEO CONFERENCE SYSTEM**

(57) The present invention relates to a method for calibrating an eye tracking device (16) for capturing the gaze (g) of a specific video conferee (P) on the screen (13) of a computing device, by means of a video conference system having a user interface (11) to display at least one other video conferee (P1, P2, P3) on the screen. Calibration of the eye tracking device comprises the steps of: i) retrieving the position (s1, s2, s3) of the other video conferee or each other video conferee (P1, P2, P3) as displayed in said user interface, in relation to said screen (13); ii) retrieving the activity state (a1, a2, a3) corresponding to the other video conferee or to each other video conferee (P1, P2, P3); iii) generating an attention model as a function of said position (s1, s2, s3) and said corresponding activity state (a1, a2, a3) per other video conferee (P1, P2, P3) which indicates the areas which are most likely to be looked at by an arbitrary video conferee, and iv) computing the calibration parameters for the eye tracking device (16) to output gaze (g) which best overlap with said areas according to said attention model. Capturing the gaze (g) of the specific video conferee (P) on the screen of the computing device (13) comprises: a) configuring said eye tracking device (16) with said computed calibration parameters, and b) retrieving in real-time said gaze (g) of said specific video conferee (P).

Fig. 6

EP 4 113 983 A1

**Description**

**Field of the invention**

The present invention concerns a method for capturing the gaze of a user on the screen of a computing device with an eye tracking device with minimal to no explicit user calibration procedures.The invention further concerns a method for a calibration of an eye-tracking device by means of engaging with a video conference system.

**Description of related art**

Gaze, i.e. the point at which a user is looking and/or the line-of-sight with respect to his eye, is an important cue of human behaviour. Gaze and movements thereof are indicators of the visual attention as well as of given thoughts and mental states of people.

Gaze estimation thus provides support to domains like Human-Robot-Interaction (HRI), Virtual Reality (VR), social interaction analysis, or health care. In particular, in video conference systems, capturing gaze information of the participants of the video conference can help communicate the attention of a participant, and thus facilitate the overall communication. As an example, Greer and Dubnov ["Restoring Eye Contact to the Virtual Classroom with Machine Learning", Proceedings of the 13th International Conference on Computer Supported Education (2021)] managed to build a system in which a deep neural network would be used to predict the gaze of a user on a screen, during a zoom video conference call, and the name of the person being looked at would be displayed on the video of the respective person before being sent to the rest of video conferees. Participants of the experiment reported a smoother interaction, as it would convey to whom a person of interest was looking at while speaking. Although, the authors reported their model would not need an explicit calibration, they also reported the prediction accuracy would decay rapidly depending on the number of participants in the call, due to the smaller spatial coverage. Such errors could be mitigated by calibrating the gaze tracker to the specific user.

Overall, gaze can be modelled in multiple ways according to the use case and/or to the application domain. When interacting with computers, tablets or mobile devices, gaze may represent the point of regard, i.e., the point where a person is looking at within a 2D flat screen, in either metric values or in pixel coordinates. When modelling attention to 3D objects, gaze can be the 3D point of regard obtained by intersecting the line-of-sight to the 3D environment. Alternatively, gaze can be modelled as the line-of-sight itself, be it the visual axis or optical axis of the eye, represented as a 3D ray, as a 3D vector or having simply an angular representation defined with respect to a preferred coordinate system.

Non-invasive vision-based gaze estimation has been addressed based on geometric models of the human eye and on appearance within an image.

Feature based approaches rely on eye feature extraction (like glints when working with infrared systems, eye corners or iris centre localization) and the best performing methods learn a geometric model of the eye and then infer gaze using these features and model. However, these approaches have several disadvantages. They usually require high resolution eye images for robust and accurate feature extraction, they are prone to noise or illumination, and they do not handle well head pose variabilities and medium to large head poses.

Other methods rely on an appearance of the eye within an image, i.e. directly predicting the gaze itself directly from the input image by means of a machine learning based regression algorithm, that maps the image appearance into gaze parameters. Such regression algorithm would adapt a model's parameters according to training data, which would be composed of samples of eye, face, and/or body images which are labelled with ground truth gaze. By adapting the model parameters according to the training data, the model becomes capable of predicting the gaze of unseen images (test data). These approaches carry the potential of providing a robust estimation when dealing with low to mid-resolution images and may obtain good generalization performance. However, the accuracy of appearance-based methods is generally limited to around 5 to 6 degrees, while exhibiting high variances and biases between subjects. Moreover, the robustness of these methods is generally dependent on head poses and eye shapes, as well as the diversity of the training set.

Independently of the methodology used for gaze estimation, the human appearance and eye anatomy changes from person-to-person, and therefore it is preferable to conduct explicit calibration procedures where the specific user is asked to look at a set of 1, 3, 5, or typically 9 points displayed on a screen or in the environment. These calibration points are then used to compute a personalized model for gaze estimation whose nature is specific to the principle used by the eye tracker.

Thus, a limitation of such systems is the need for requiring explicit gaze calibration procedures which assume the user can engage with a user interface to provide the necessary calibration data. This can be problematic in applications such as video conference calls where minimal input from the user is expected.

**Brief summary of the invention**

An aim of the present invention is therefore to provide a method for an eye tracking system for capturing the gaze of a user on the screen of the computing device with minimal to no explicit user calibration procedures.

Another aim of the present invention is to provide a method for a quick calibration of an eye-tracking device by means of engaging with a video conference system.

According to the invention, these aims are achieved by means of a method for calibrating an eye tracking device for capturing the gaze of a specific video conferee on the screen of a computing device, by means of a video conference system having a user interface to display at least one other video conferee on the screen. Calibration of the eye tracking device comprises the steps of: i) retrieving the position of the other video conferee or each other video conferee as displayed in said user interface, in relation to said screen; ii) retrieving the activity state corresponding to the other video conferee or to each other video conferee; iii) generating an attention model as a function of said position and said corresponding activity state per other video conferee which indicates the areas which are most likely to be looked at by an arbitrary video conferee, and iv) computing the calibration parameters for the eye tracking device to output gaze which best overlap with said areas according to said attention model. Capturing the gaze of the specific video conferee on the screen of the computing device comprises: a) configuring said eye tracking device with said computed calibration parameters, and b) retrieving in real-time said gaze of said specific video conferee.

In the context of the present invention, said at least one other video conferee should be understood as one to N video conferees, wherein N is a number comprising for example three, four, five, etc. up to ten or more video conferees.

In an embodiment, the step of generating the attention model further comprises the steps of: a) accumulating pairs of positions, and corresponding activity state of said other or each other video conferee for different time steps, and b) generating said attention model as a function of said pairs of positions and corresponding activity state of said other or each other video conferee.

In an embodiment, the step of computing the calibration parameters further comprises the steps of: a) retrieving a set of gaze calibration points which are the most likely to be looked at by an arbitrary video conferee according to said attention model, and b) computing the calibration parameters which minimize the difference between said set of gaze calibration points and the corresponding gaze of said arbitrary video conferee.

In an embodiment, the calibration of the eye tracking device further comprises the steps of: a) retrieving the current best estimate for the calibration parameters, b) configuring said eye tracking device with said current best estimate calibration parameters, c) retrieving the gaze estimate from the eye tracking device, and d) computing the calibration parameters as a function of also said gaze estimate.

In an embodiment, said gaze estimate is compared to said attention model as to further determine whether the calibration parameters should be computed or remain as the current best estimate for the calibration parameters.

In an embodiment, said activity state of the other or each other video conferee comprises at least one or any combination of two or more of the following states: speaking activity; voice prosody; perceived emotion; body pose; head nodding; hand gesturing; waving; speech.

In an embodiment, the step of generating an attention model further comprises the steps of: a) retrieving a user interface state corresponding to inherent features of the video conference system, b) generating an attention model as a function of also said user interface state.

In an embodiment, said user interface state is retrieved as a function of at least one or any combination of two or more of the following inherent features of the video conference system: video conferee's region highlight; Raise Hand indicators; event sounds; screen sharing mode; video conferee joining or leaving the video conference; chat activity.

In an embodiment, the attention model is a spatio-temporal visual attention map representing the likelihoods that each of a set of pixels is being looked at by said arbitrary video conferee for a given time step.

In an embodiment, the step of generating said attention model uses a model of probabilistic likelihoods and conditional probabilities to model the relations of the at least one or any combination of two or more of the following input data: positions, activity state, user interface state, and gaze estimate, as to generate said spatio-temporal visual attention map from said input data.

In an embodiment, the step of generating an attention model uses a machine learning algorithm, preferably a deep neural network, which outputs said visual attention map and which receives as input at least one or any combination of two or more of the following inputs: positions, activity state, user interface state, and gaze estimate.

In an embodiment, the step of computing the calibration parameters further comprises the steps of: a) retrieving a gaze calibration path which is the most likely gaze path to be looked at by the arbitrary video conferee according to said attention model, and b) computing the calibration parameters which minimize the difference between said gaze calibration path and the corresponding gaze of said arbitrary video conferee.

In an embodiment, retrieving the position of said other or each other video conferee is further supported by detection or segmentation algorithms, using one or more of the following features: face detection; body pose detection; body segmentation; eyes detection; facial landmarks.

In an embodiment, the step of computing the calibration parameters further comprises the steps of: a) computing a temporal series of eye movements events, among fixations, saccades and smooth pursuit events, as a function of said gaze estimate, and b) computing the calibration parameters as a function of also said temporal series of eye movements events.

Another aspect of the invention relates to a tangible computer product containing program code for causing a processor to execute the method as described above when said code is executed on said processor.

Brief Description of the Drawings

The invention will be better understood with the aid of the description of embodiments given by way of examples and illustrated by the figures, in which:

- Fig. 1 shows a schematic view of a system comprising a laptop computer, executing a video conference software having a user interface, and a mobile phone as an eye-tracking device according to an embodiment of the present invention,

- Fig. 2 shows a schematic view of a system comprising a desktop computer, a mobile phone as an eye-tracking device and a remote server in communication with the desktop computer. The eye-tracking device is implemented through software being executed on either the desktop computer or the remote server,

- Fig. 3 shows a schematic view of a screen displaying an attention cue to capture the fixated point-of-regard according to an embodiment of the present invention,

- Fig. 4 shows a schematic view of the gaze estimate g retrieved as eye-in-head angles and transformed into a gaze ray referred to the head coordinate system HCS according to an embodiment of the present invention,

- Fig. 5 shows a schematic view of a system comprising a desktop computer, an external camera and computing device and a remote server in communication with the desktop computer,

- Fig. 6 shows a schematic view of a computing device screen, displaying a user interface of the video conference system with three video conferees and further showing their positions and likelihood to be looked at as a probability map, according to an embodiment of the present invention,

- Fig. 7 shows a schematic view of a computing device screen, displaying a user interface of the video conference system with three video conferees and further showing their activity state -based probability map, according to an embodiment of the present invention, and

- Fig. 8 shows a schematic view of a computing device screen, displaying a user interface of the video conference system with three video conferees and further showing their combined activity and position-based probability map, according to an embodiment of the present invention.

**Detailed Description of possible embodiments of the Invention**

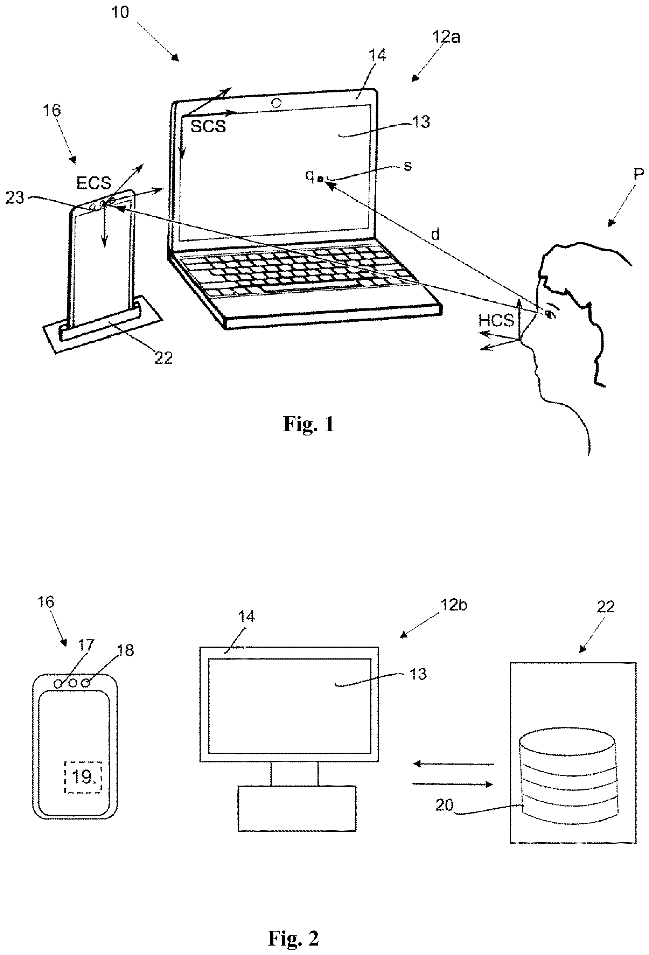

Figures 1 and 2 schematically show an example of a system 10 comprising a computing device 12a, 12b and an eye-tracking device 16. The computing device may be for example a laptop computer 12a, a desktop computer 12b, a gaming console connected to a display (not shown), a smart tv (not shown), a cloud-based system controlling a local display (not shown), or a tablet computer (not shown).

In an embodiment, the tracking device is a specialized device configured to conduct the eye tracking process. The specialized device is typically composed of a combination of infrared cameras and infrared illuminators and processing units.

In an embodiment, the eye tracking device is in-built into the computing device 12a, 12b, which may be further configured to use the standard webcam as the sensor. The eye tracking is achieved through software or in combination of ASICs and software. In another embodiment, more complex sensor configurations are possible, such as additional RGB sensors, IR sensors, depth sensors, time-of-flight sensors or and possible IR illuminators.

In an embodiment, the eye-tracking functionality is achieved through software embedded and distributed within the video conference software which is executed by the computing device.

In an embodiment, the tracking device 16 is a mobile device such as a smartphone configured to execute an eye tracking program. In a preferred embodiment, the smartphone 16, as shown for example in Figure 2, comprises an RGB camera 17 as well as a depth-sensing camera 18 such as the TrueDepth® camera of the IPhone®. In another embodiment, the device comprises one or multiple infrared cameras as an alternative or complementary to the RGB camera. Such infrared data may also be the amplitude data from time-of-flight sensors. In another non-illustrated embodiment, the mobile device 16 may comprise dual or multiple cameras, without any depth-sensing camera, that can together work as a depth sensor through stereo triangulation. Cameras of one or different types could indeed be mixed. The resolution, type and focal of different cameras may vary.

The gaze estimate g of the user may be obtained by different methods. For example, the gaze of the user may be acquired by retrieving an input image and a reference image of an eye of the user and processing the input image and the reference image to estimate a gaze difference between the gaze of the eye within the input image and the gaze of the eye within the reference image. The gaze of the user is retrieved using the estimated gaze difference and the known gaze of the reference image. This procedure is disclosed in detail in WO2020/044180, the content of which is hereby incorporated by reference.

In another example, the gaze of the user may be acquired by comparing an image geometric model with at least one image segmentation map generated from one input image observation corresponding to an image of the user's eye and iteratively modifying at least one parameter in the set of geometric parameters of the image geometric model to generate a new image geometric model of a user's eye until a model correspondence value reaches the optimal value. This procedure is disclosed in detail in WO2020/208494, the content of which is hereby incorporated by reference.

Other methods for gaze estimation are disclosed in detail for example in WO2014/146199 and WO2015/192879. Yet other methods, such as those based on pupil-centre-corneal-reflection (PCCR) may also be suitable to retrieve the gaze estimate g, preferably if provided as a 3d ray. Other methods aim at training and deploying end-to-end neural network systems which take images of the full face of the user as input and, in some cases, cropped images of the eye regions, to make a direct prediction of point-of-regard on the screen, as done by Krafka et al. [Eye Tracking for Everyone, IEEE Conference on Computer Vision and Pattern Recognition (CVPR), 2016].

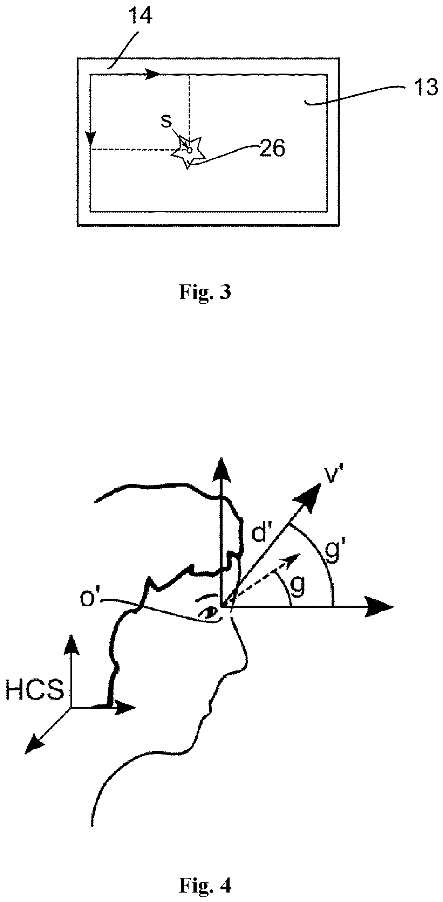

The gaze estimate g may therefore be modelled in different ways, depending on the gaze estimation principle or the specific eye tracking device. In one embodiment, the gaze estimate g is directly a 3d ray representing the line-of-sight of the user with respect to the eye tracker coordinate system (ECS). In another embodiment, the gaze estimate g are gaze angles describing the eyeball rotation referred to the coordinate system (HCS) of the head of the user, referred to, hereafter, as the "eye-in-head gaze angles", as illustrated in Figure 4. In an alternative embodiment, the gaze estimate g is a differential gaze angle as in WO2020/044180. In yet another embodiment, the gaze estimate g does not define a semantic interpretation and is instead a feature vector, preferably of low dimensionality, as it could be output by an artificial neural network mapping from the input video feed (RGB, RGB-D, Infrared, etc.) which may or may not be pre-processed into preferable regions of interest, before mapping to the gaze estimate.

Most eye tracking systems deliver higher accuracy when calibrated for the specific user whose gaze is meant to be tracked. The gaze calibration process typically consists of asking the user to look at a sequence of points on a screen, while the eye tracking system is capturing data of the user while having the knowledge of the point-on-screen they are meant to be looking at. These are the typical 1, 3, 5, 9, N point calibration processes. Figure 3 schematically shows an example of a system capturing the point-of-regard on the screen 13, by means of displaying an attention cue 26, drawn at coordinates s, that the user P is meant to look at. The result of the calibration process is for the system to compute user-specific parameters θ, i.e., the calibration parameters, which have influence on the computation of the gaze estimate g. We can furthermore refer to these processes as explicit calibration procedures.

In a preferred embodiment, the eye tracking method would eventually deliver a gaze ray d, representing the 3D line-of-sight. In such a scenario, the mapping from the gaze estimate to the gaze ray d is therefore dependent on the nature of the gaze estimate g.

In an embodiment, the gaze estimate g is directly the line-of-sight of the user as given by the eye tracking device. The mapping to the gaze ray d could therefore be a simple affine transform (with parameters θ) of the gaze estimate g parameters into the gaze ray d parameters. The affine transform may simply be identity transform and therefore implying that the gaze ray d is directly the gaze estimate g.

In an embodiment, illustrated in Figure 4, the gaze estimate g is the eye-in-head gaze angles. It must be noted that typically 2 angles: pitch, and yaw, are used to represent an eye-in-head orientation. For simplicity, Figure 4 shows only one of such angles as the face is drawn from a side view. In such case, mapping the gaze estimate g into a gaze ray d implies i) applying an affine transform from the gaze estimate g into corrected gaze angles g', whereas the affine transform is parameterized by the person-specific calibration parameters θ; ii) transforming the gaze angles g' into a gaze vector v'; iii) combining the gaze vector v' with the gaze origin point o' to define a gaze ray d' in the coordinate system (HCS) of the head of the user; iv) applying to the gaze ray d' the rigid transform given by the corresponding head pose of the user, to obtain the gaze ray d defined in the coordinate system (ECS) of the eye tracking device.

In an embodiment, in which the gaze estimate is a non-semantic feature vector, the mapping to the gaze ray d may use a machine learning regression model, such as a neural network with weights θ, which regresses from the gaze estimate into eye-in-head gaze angles which can be transformed into a 3d gaze vector d using the current head pose, or regresses directly into the 3d gaze vector d in the ECS.

In an embodiment, the calibration comprises user specific parameters of generative models modelling the anatomy and appearance of the eye or the head. These include but are not limited to:

1. Permanent geometric parameters of the eye anatomy like angle between the intersection of the optical and visual axes of an eye, eyeball radius, radius of the iris etc;

2. Temporary variable geometric parameters like the current size of the pupil;

3. Permanent parameters describing the facial geometry. This includes but is not limited to e.g. width and height of the face, inter ocular distance, parameters describing a geometric mesh fitted to the face etc.;

4. Temporary variable parameters describing the anatomy of the face like parameters modelling the beard and moustache, the haircut, the extent of sun tan.

In an embodiment, it is assumed that the gaze estimate g are indeed the eye-in-head gaze angles ($yaw_i$, $pitch_i$) and the person-specific calibration parameters $\theta$ are simply an additive bias ($yaw_{bias}$, $pitch_{bias}$), as follows:

$$(yaw, pitch) = (yaw_{bias}, pitch_{bias}) + (yaw_i, pitch_i)$$

Such angles can be represented as a normalized gaze direction in the head coordinate system HCS as $n = (n_x, n_y, n_z)$ such that the gaze direction is given by:

$$(n_x, n_y, n_z) = \left(cos(pitch)sin(yaw), sin(pitch), cos(pitch)sin(pitch)\right)$$

In an embodiment, instead of a simple bias on gaze angles, an affine transform could be used on the eye-in-head gaze angles to account for scaling or skewing, for example.

In an embodiment, the person specific gaze prediction might be obtained from a non-generative model like a machine learning model. Updating the parameters of such a model using the at least one point of regard on screen and the at least one gaze estimate would constitute the calibration step.

In an embodiment, the estimation of the point of regard on screen might be done without the modelling of the 3d scene. Instead, the position on the screen can be regressed directly from the RGB and or depth image using a parameterizable machine learning model. In such a case, updating the parameters of the model using the at least one point of regard on screen would constitute the calibration step.

In an embodiment, the gaze estimate g might be obtained using the current input image and reference images corresponding to the at least one known point of regard on screen. To this end a difference in gaze direction can be computed between the sample image and the current input image. Then, this difference is applied to the known gaze direction in the sample image. In such an embodiment, collecting and storing the calibration samples would be the calibration step.

In an embodiment, the calibration parameters comprise recognizing accessories of the head like glasses, sunglasses, ocular lenses, make up and masks. The accessory might be modelled implicitly, e.g., by fitting a parameterizable head model to a head wearing a medical mask.

In an embodiment, the calibration parameters might include the lighting conditions. For example, there might be a model modelling the head appearance which comprises skin tan and lighting conditions.

In an embodiment, the calibration parameters might include the camera parameters of the head tracking device.

In an embodiment, a search across different algorithms to find the one yielding best result on the at least one calibration samples might constitute the calibration step.

In an embodiment, certain user specific parameters might be estimated without points of regard on the screen. For example, the shape of the head can be estimated from the RGB and depth information only and the accessory by applying machine learning models for detection and classification.

In an embodiment, the calibration parameters might be dependent on facial expression and head pose of the user relative to gaze tracking device or computational device.

In an embodiment, the at least one point of regard on the screen and the corresponding gaze ray prediction need to be stored. The estimation of the calibration parameters can be done after each new incoming calibration sample or after a certain amount of calibration samples is collected.

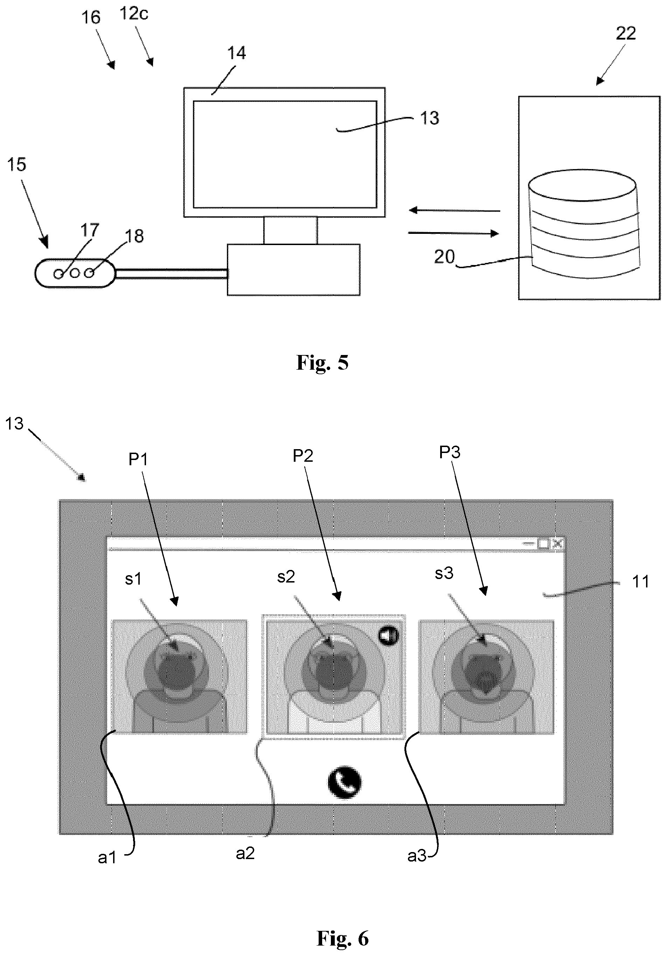

In a preferred embodiment, the calibration process is conducted automatically without any active user interaction, with the sole assumption that the video conferee P is at least partially engaged in a video conference call. As depicted in Figures 6 to 8, a typical user interface for a video conference system displays the data from each of the video conferees webcam video streams in a tile-like spatial layout. If the webcam video stream of a video conferee P1, P2, P3 is not available, it is typical for such systems to substitute the video region for a picture, an icon, a letter, or similar items that represent a video conferee which is engaged only through audio. In either scenario, at least subset of the video conferees would then be representing in the user interface by a dedicated region, which is furthermore apparent to the user which region is assigned to which video conferee.

In a preferred embodiment, the automatic calibration process is realized by leveraging the assumption that in a video conference call, an arbitrary video conferee, i.e. a hypothetical video conferee randomly sampled from a population and therefore not the video conferee P interacting with the system, will tend to look at the other video conferees P1, P2, P3 in an order which has high correlation to conversational social signals and user interface events. Such set of assumptions can be integrated into an attention model which, as input, takes any of the current state of the system, video conferees positions, their states and/or conversational dynamics, to output the spatio-temporal regions on the screen which are likely to be looked at by an arbitrary video conferee and/or the spatio-temporal regions which are unlikely to be looked at by an arbitrary video conferee. Attention models therefore do not require monitoring or tracking the specific video conferee P interacting with the system.

As an attention model can output a representation of the spatio-temporal regions on the screen which are likely or unlikely to be looked at by an arbitrary video conferee, this output can then be used for the process of gaze calibration. Nevertheless, as such data is only a guess for whether the user is looking at a region at a given time, we can define it as a soft calibration data, that can indeed become a substitute for explicit calibration procedures.

In an embodiment, the modelling of the soft calibration data can be done through probability distributions over the screen pixels, in which each pixel is assigned a probability that an arbitrary video conferee is looking at said pixel at a given time. In the computer vision field, such distributions are also known as visual attention maps. Furthermore, different sources of information can contribute and generate independent visual attention maps that can be later combined. In an embodiment, the visual attention maps can also be sparse, dense, or represent a subset of regions.

In an embodiment, the desired visual attention map, i.e., represented as probability distribution $P_a$ for the point-of-regard on screen, is obtained from individual probability distributions $P_{a,i}$ modelling individual attention cues like position of the conferences, their activity, mouse movements on the computing device, screen-shared content.

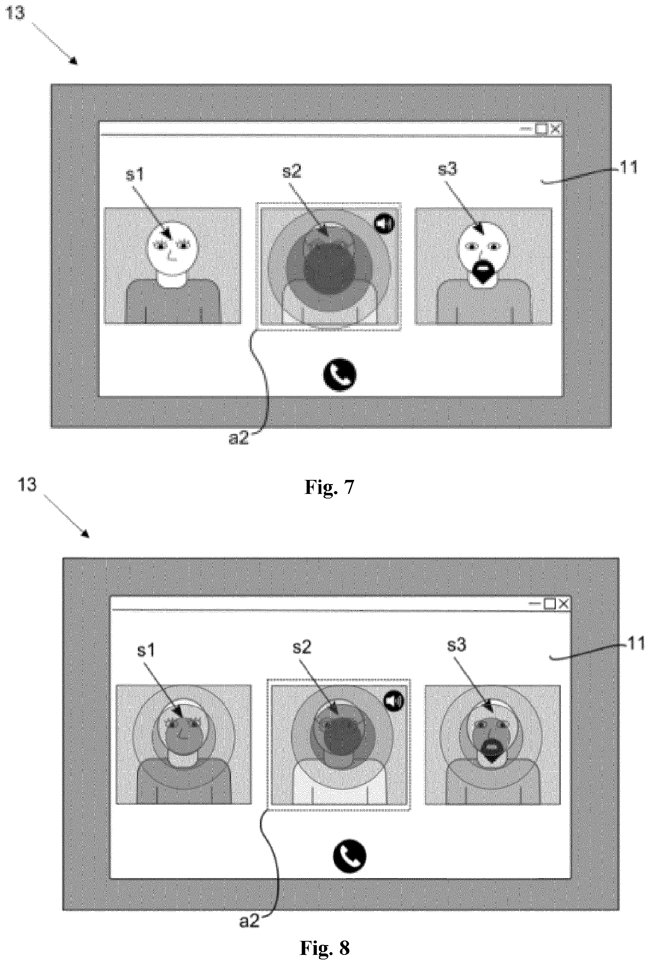

In an embodiment the probability distribution $P_a$ is just the normalized product of the individual probability distributions $P_{a,i}$. For example, in Figure 6, we model the "position" probability map of the video conferees P1, P2, P3 of the conference with a gaussian mixture model. Its means are placed at the locations s1, s2, s3 of the video conferees and its standard deviations are scaled with the sizes of the windows displaying each participant. The activity probability map shown in Figure 7 is yet another gaussian placed at the position of the activity, in our case participant s2 which is assumed to be speaking. The final probability map depicted in Figure 8 is the normalized product of these 2 probabilities. In other words, such an example of an embodiment assumes that people in a video conference are likely to look at other video conferees when they are talking. This information can therefore serve as soft calibration data. Nevertheless, it can be modelled as a probability distribution in which pixels unrelated to either position s1, s2, s3 of participants or their activity a1, a2, a3, will have a non-zero probability mass.

In an embodiment, the location s1, s2, s3 of the video conferees can be automatically detected using prior knowledge of the user interface, image processing and even optical character recognition (OCR) systems. In a preferred embodiment, direct software access is available using application user interfaces (API) suited for retrieving the information of the location of each of the video conferees (on the user interface layout), their video stream and further events of said user interface.

Different formulations can be made as to generate individual probability distributions $P_{a,i}$, one approach leverage the current state-of-the-art of social signal processing and conversational dynamics, i.e., actions of other video conferees or events in the conversation that are likely to capture the attention of those engaged in the video conference. In this context, we can refer to such elements as activity states. Examples are, but not limited to:

1. When a video conferee is speaking. In conversational settings, the speaker is likely to attract more attention than others who are listening or simply not engaged in the conversation.

2. The voice prosody of those speaking. In conversations, a speaker may raise their voice, or increase their pitch of voice to stress an important part of the message being conveyed. Such events are likely to attract the attention of listeners.

3. Perceived emotion. If a video conference participant, whether speaking or listening, starts to express emotions (happiness, sadness, anger, etc.) or other facial expressions that may be unexpected, or different from other participants, then this can also attract the attention of a user, and thus we can assume a user is likely to look at that participant at that given time.

4. Body pose, as video conferees may be leaning forward, backwards, standing, etc. to engage or disengage in the conversation. When those changes occur, then it is likely for an arbitrary video conferee to look at that other video conferee, whether said other video conferee is talking or not.

5. Head nodding can also be a cue in social dynamics that convey interest, or backchanneling. A visible head nod can make a video conferee stand out, in terms of attention, in comparison to other video conferees.

6. Hand gesturing can also attract attention at a given time.

7. Waving is a strong cue, as people use waving actions to explicitly attract the attention of others. Thus, a video conferee who waves is likely to be looked at that given time by an arbitrary video conferee.

8. Speech is clearly an important cue for attention, as specially a video conferee may call the name of the user at a given time, which would make said user to likely look at that participant within a short time.

The recognition of said events or states can be retrieved through computer vision, image processing, audio processing, or speech recognition technologies, typically implemented through deep neural network systems. Many of such signals may furthermore be available off-the-shelf on commercial state-of-the-art products, including the video conference systems themselves.

In an embodiment, an additional set of individual probability distributions $P_{a,i}$ can be modelled from information inherent to the video conference system and features. The assumption is that the user interface has been designed to help a user navigate through the video conference system, as well as facilitating the user engagement on the video conference event. Some of said events and features have therefore been designed in a way in which, either intentionally or accidentally, they are likely to capture the attention of a video conferee engaged with said video conference. Examples are, but not limited to:

- "Raising hand indicator", which is the functionality in which a video conferee may indicate they are interested in talking next but, rather than interrupting the current speaker, they click an icon to signal others they are virtually raising their hand. Such even can typically be accompanied by an audio cue, and it is likely to capture the attention of the user as soon as activated.

- "Video conferee joining or leaving the video conference". In such events, the user interface tends to reorganize the layout of video conferees and indicate whether implicitly or explicitly the location of the new video conferee (in a joining event). A user is likely to notice and therefore look at the new participant soon after they join.

- Switching to presentation mode. In presentation mode, the user interface may reorganize the layout and emphasize the content being shared by one of the video conferees, typically by making its relevant are larger. Users are likely then to look at the shared content.

- "Chat activity", which will tend to pop up in specific windows that attract the attention of the user as it is meant to be read.

- "Video conferee's region highlight", which is the functionality in which the user interface highlights the area of a participant speaking.

- "Event sounds" which will indicate a change in the state of the video conference system. Such changes are for example caused by video conferees entering the conference or when the Raise Hand indicator is activated. An event sound is likely to alert the user drive the attention of the user to a screen region where the change of state takes places.

In an embodiment, the content of the screen shared by one of the conferees can provide cues for the probability map of the point of regard. Such cues are for example text, faces, the mouse of the presenter etc.

In an embodiment, the videos of the conferees might be further processed with computer vision and machine learning algorithms to obtain semantic information like facial expressions, facial landmarks, body pose, semantic segmentation or detection of the conferee, action recognition. Such information, available at the pixel level, may be used to refine the probability distributions $P_{a,i}$ beyond Gaussian distributions and into more complex probability boundaries.

In an embodiment, the probability distribution $P_a$ is eventually obtained by simple multiplications and normalizations of the individual $P_{a,i}$ probability maps. This is mathematically motivated by assumptions of conditional independence between the difference sources of information. In a further embodiment, renormalization techniques can be applied to compensate the over-certain probabilities that can be generated due to conditional independence assumptions which are not true in practice, as some of the cues may be correlated to each other.

In an embodiment, instead of explicit modelling of the joint probability $P_a$ through individual $P_{a,i}$, the probability $P_a$ can also be obtained from a machine learning model trained to infer these probability maps from any combination of the probability cues described above.

In a preferred embodiment, the visual attention maps have a spatial component as well as a time component. It may be then convenient to smooth the probabilities over time, related to specific events.

To train this machine learning model, it is preferable to collect training data with information from the video conference system paired with recorded gaze data over a plurality of video conferences under conditions and involving different users or number of video conferees. This gaze data can be acquired using a robust and reliable gaze tracking system, ideal lighting conditions, ideal head pose, explicit user calibrations, etc. The data from the video conference system can be any of what has been described previously, such as position of participants, UI events, speech activity, gestures, webcams videos, sound cues, joining/leaving events, etc. This information can then be stored as a time sequence of coordinates, binary signals, binary maps, etc. Then a machine learning model can be trained to predict probability maps by introducing a loss where the probability maps produced are optimally correlated with the ground truth gaze coordinates.

In an embodiment, a model predicting the visual attention maps can also be trained in a semi- or weakly supervised manner. Given a gaze tracking system not relying on the information from the video conference system, and a hand-crafted probability model based on individual probabilities and conditional independence assumptions, the movements of the gaze ray can provide cues on what peak of the point of regard probability was attended. Subsequently, the non-attended peaks of the probability map are erased. These revised probability maps can also become as input to the model training process.

In an embodiment, the machine learning model predicting the probability map can be a multi-path neural network. The different paths treat different types of information sources. For example, there is a path for the visual screen content, for the sound of the participants, the sound of the UI, for each of the video conferee webcam data, for receiving encodings of actions or GUI events, etc. Such encodings could be for example 3-dimensional binary feature maps with the first dimension encoding the event and the other 2 dimensions encoding the location. These inputs are mapped to feature maps which then are fused into a single feature map on higher levels.

In an embodiment, the machine learning model might be a recurrent neural network taking the features or predictions of the previous frames as input for the subsequent frame.

In an embodiment, the machine learning model might be a multi-task neural network only receiving the visual screen content and the sound. It would be trained to predict the point of regard probability map jointly with the actions and events described above. That way it might learn shared features between these and the final task and thus establish a connection between them.

In an embodiment, conducting the gaze calibration process to estimate the calibration parameters ($\theta$) takes the step of selecting the set of points from the visual attention maps which exhibit the highest probabilities over time and space. Selecting those points may further utilize techniques such as non-maximal suppression to ensure the points are not heavily correlated. Once a set of N points are extracted (which can be just one point), typical calibration processes using N-point calibration procedures can be employed. For example, a PCCR system may utilize those N points to calculate geometric parameters related to the cornea, pupil, refraction, etc. of the specific user. Other appearance-based methods may use said N-points to compute biases or even fine-tune a neural network.

In an embodiment, conducting the gaze calibration process to estimate the calibration parameters ($\theta$) takes the step of using dedicated algorithms that would return the most likely point temporal-path that jointly maximize the probability measures. Such strategies can therefore deliver, instead of a discrete set of N calibration points, a gaze calibration path which encodes the most likely sequence of points gazed by an arbitrary video conferee. The calibration parameters ($\theta$) can then be estimated by finding the set of parameters ($\theta$) which minimize the difference between the gaze calibration path and the gaze estimate g delivered by the eye tracker system when configured with said set of parameters ($\theta$).

In an embodiment, the most likely path of points of regard, or gaze calibration path, can be efficiently estimated using the Viterbi algorithm. In this context, the states would be "same point of fixation" vs "new point of fixation" and the probability map obtained from the information of the video conference would be the probability distribution for the point of regard given the state.

In an embodiment, the sequence of points of regard, or gaze calibration path, can be estimated by applying the Viterbi algorithm to the probability maps, while also using the gaze estimates g from the eye tracking system configured using the current best estimate for the calibration parameters ($\theta'$). Said gaze estimate can be further used to establish emission probabilities in which the optimal gaze calibration path matches the saccades (changes in gaze) computed from the sequence of gaze estimates g, within certain tolerance.

In another embodiment, a grid search over the calibration parameters (θ) can be conducted in which the eye tracking system is, at each search step, configured with a different set of parameters θ', and then observation probabilities, or emission probabilities, are established to so that the optimal gaze calibration path matches the fixations computed from the sequence of gaze estimates g, within certain tolerance. The Viterbi algorithm is then utilized on the visual attention maps and the emission probabilities to retrieve a gaze calibration path for each set of calibration parameters θ'. The gaze calibration path which leads to the highest Maximum likelihood or maximum-a-posteriori estimate, can then be used to further compute the final calibration parameters (θ).

In an embodiment, the most likely gaze calibration path can be estimated using machine learning models, preferably (bi-directional) recurrent neural nets. This would require training the model to directly predict the sequence of the points of regard either from the raw inputs (video + audio stream + information from the video conference system) or from the sequence of probability maps for point of regard.

In an embodiment, given a set of gaze calibration points or path and corresponding gaze estimates g, the calibration parameters (θ) can be estimated by reducing the on-screen distance between the gaze calibration points or path and the on-screen 2D gaze estimate delivered directly by an eye tracker configured with calibration parameters (θ).

In an embodiment, given a set of gaze calibration points or path and corresponding gaze estimates g, the calibration parameters (θ) can be estimated by reducing the on-screen distance between the gaze calibration points or path and the intersection of gaze rays d with the screen, wherein computing the gaze ray d is a function of the calibration parameters (θ).

In another embodiment, given a set of gaze calibration points or path and corresponding gaze estimates g, the calibration parameters (θ) can be estimated by reducing the angle between the gaze ray d and the rays that can be established from the user 3D eyeball position to the 3D points on-screen defined by the gaze calibration points or path, wherein computing the gaze ray d is a function of the calibration parameters (θ).

In an embodiment, eye movements are matched to possible patterns of the movement of point of regard on the screen. For example, given two likely points of regard on the left and right, and detecting a horizontal movement of the eye matching some geometric expectations, like angular change for a given distance. Said association may help to detect whether the user is looking at points on the screen without explicit confirmation. Note that eye movements can be detected, under certain error margin, for an uncalibrated system.

In an embodiment, the calibration parameters can be estimated using a grid search and the Viterbi algorithm. The set of possible states in a given frame comprises the likely points of regard obtained from the probability map given by the video conference system. The observations would be the estimates of the gaze ray by the eye tracking device parametrized by the parameters to calibrate. For different calibration parameter values, run the Viterbi algorithm and retrieve the probability of the most likely path. Then choose the value giving the highest probability for the most likely Viterbi path.

In an embodiment, the gaze direction in HCS for a particular frame i can be modelled with a probability distribution $P_{g,i}$ which is parametrized by the user specific parameters and the uncertainty of the system estimating the gaze direction. This probability distribution induces a probability distribution for the point of regard on the screen $P_{g,s,i}$. It can be obtained by calculating the intersection points of the rays from this distribution with the screen. Given the framewise probabilities for the points of regard $P_{a,i}$, the calibration parameters can be estimated by searching for parameters which jointly for all frames:

1. Reduce the Kullback-Leibler divergence between $P_{a,i}$ and $P_{g,s,i}$ simultaneously for all frames i.

2. Reduce the Euclidean distance between the argmax values of $P_{a,i}$ and $P_{g,s,i}$ on the screen

3. Reduce the minimal Euclidean distance between any local argmax values of $P_{a,i}$ and $P_{g,s,i}$ on the screen

4. Reduce the distance from the argmax on screen position of $P_{a,i}$ and the argmax ray from $P_{g,i}$

5. Reduce the minimum distance from any local argmax on screen position of $P_{a,i}$ and any local argmax ray from $P_{g,i}$

6. Train a machine learning model to predict the sequence of points of regard from $P_{a,i}$ and $P_{g,i}$ or $P_{g,s,i}$

In an embodiment, RANSAC-style approaches may be used to discard outliers. For example, situations in which the user is disengaged with the video conference system, a window is covering said system or the user is not following typical attention patterns. In such an approach, the optimal calibration parameters yield metric values surpassing certain thresholds for as many frames as possible. For example, for approach 1 above, the Kullback-Leibler divergence shall be smaller than a certain threshold in as many frames as possible.

In an embodiment, the gaze ray estimate d, or the final point of regard on the screen can be estimated using a temporal model taking into account the gaze ray estimates or the point of regard estimates for the previous frames.

In an embodiment, the spatial distance of temporally consecutive estimates of gaze calibration points or paths are used to detect the saccades of human gaze. The estimate for point of regard for one saccade can be obtained from all the frames belonging to this saccade, for example by simple averaging.

In an embodiment, the estimate of the point of regard on screen or the gaze ray can be obtained using a machine learning model, for example a recurrent neural net, Kalman filter or a Hidden Markov Model.

In an embodiment, a recurrent neural network would receive as frame wise input the eye images and additionally the predictions and/or feature vectors obtained from previous frames.

In an embodiment, the transitions between the saccades can be modelled as hidden states of a hidden Markov model, i.e. one state would be "same saccade" and the other state "new saccade". The estimate of the point of regard on screen or the gaze ray would be the observable conditioned on the state.

In an embodiment, the automatic calibration process may be furthermore combined with explicit calibration procedures, executed before or during the automated calibration process.

Various modifications and variations to the described embodiments of the invention will be apparent to those skilled in the art without departing from the scope of the invention as defined in the appended claims. For example, the eye-tracking device may be a device other than a mobile phone such as a stand-alone eye-tracking device with its own processing unit and a communication protocol allowing to either share the landmarks points, or video data. Alternatively, the communication protocols are configured such that the camera feed of the computing device, as well as mechanical parameters of the screen and other needed information are sent over to the eye-tracking device, which internally makes the necessary calibration computations.

**Claims**

1. A method for calibrating an eye tracking device (16) for capturing the gaze (g) of a specific video conferee (P) on the screen (13) of a computing device, by means of a video conference system having a user interface (11) to display at least one other video conferee (P1, P2, P3) on the screen, wherein the calibration of the eye tracking device comprises the steps of:

   retrieving the position (s1, s2, s3) of the other video conferee or each other video conferee (P1, P2, P3) as displayed in said user interface, in relation to said screen (13),
   retrieving the activity state (a1, a2, a3) corresponding to the other video conferee or to each other video conferee (P1, P2, P3),
   generating an attention model as a function of said position (s1, s2, s3) and said corresponding activity state (a1, a2, a3) per other video conferee (P1, P2, P3) which indicates the areas which are most likely to be looked at by an arbitrary video conferee, and
   computing the calibration parameters for the eye tracking device (16) to output gaze (g) which best overlap with said areas according to said attention model,

   wherein, capturing the gaze (g) of the specific video conferee (P) on the screen of the computing device (13) comprises:

   configuring said eye tracking device (16) with said computed calibration parameters, and
   retrieving in real-time said gaze (g) of said specific video conferee (P).

2. The method of claim 1, wherein the step of generating the attention model further comprises the steps of:

   accumulating pairs of positions (s1, s2, s3), and corresponding activity state (a1, a2, a3) of said other or each other video conferee (P1, P2, P3) for different time steps, and
   generating said attention model as a function of said pairs of positions (s1, s2, s3) and corresponding activity state (a1, a2, a3) of said other or each other video conferee (P1, P2, P3).

3. The method of any of the preceding claims, wherein the step of computing the calibration parameters further comprises the steps of:

   retrieving a set of gaze calibration points which are the most likely to be looked at by an arbitrary video conferee according to said attention model, and

computing the calibration parameters which minimize the difference between said set of gaze calibration points and the corresponding gaze (g) of said arbitrary video conferee.

4. The method according to any of the preceding claims, wherein the calibration of the eye tracking device further comprises the steps of:

retrieving the current best estimate for the calibration parameters,
configuring said eye tracking device (16) with said current best estimate calibration parameters,
retrieving the gaze estimate (g) from the eye tracking device (16),
computing the calibration parameters as a function of also said gaze estimate (g).

5. The method according to claim 4, wherein said gaze estimate (g) is compared to said attention model as to further determine whether the calibration parameters should be computed or remain as the current best estimate for the calibration parameters.

6. The method according to any of the preceding claims, wherein said activity state (a1, a2, a3) of the other or each other video conferee (P1, P2, P3) comprises at least one or any combination of two or more of the following states: speaking activity; voice prosody; perceived emotion; body pose; head nodding; hand gesturing; waving; speech.

7. The method according to any of the preceding claims, wherein the step of generating an attention model further comprises the steps of:

retrieving a user interface state corresponding to inherent features of the video conference system,
generating an attention model as a function of also said user interface state.

8. The method according to claim 7, wherein said user interface state is retrieved as a function of at least one or any combination of two or more of the following inherent features of the video conference system: video conferee's region highlight; Raise Hand indicators; event sounds; screen sharing mode; video conferee joining or leaving the video conference; chat activity.

9. The method according to any of the preceding claims, wherein the attention model is a spatio-temporal visual attention map representing the likelihoods that each of a set of pixels is being looked at by said arbitrary video conferee for a given time step.

10. The method according to claim 9, wherein the step of generating said attention model uses a model of probabilistic likelihoods and conditional probabilities to model the relations of the at least one or any combination of two or more of the following input data: positions (s1, s2, s3), activity state (a1, a2, a3), user interface state, and gaze estimate (g), as to generate said spatio-temporal visual attention map from said input data.

11. The method according to any of claims 9 or 10 wherein the step of generating an attention model uses a machine learning algorithm, preferably a deep neural network, which outputs said visual attention map and which receives as input at least one or any combination of two or more of the following inputs: positions (s1, s2, s3), activity state (a1, a2, a3), user interface state, and gaze estimate (g) .

12. The method according to any of the preceding claims, wherein the step of computing the calibration parameters further comprises the steps of:

retrieving a gaze calibration path which is the most likely gaze path to be looked at by the arbitrary video conferee according to said attention model, and
computing the calibration parameters which minimize the difference between said gaze calibration path and the corresponding gaze (g) of said arbitrary video conferee.

13. The method according to any of the preceding claims, wherein retrieving the position of said other or each other video conferee is further supported by detection or segmentation algorithms, using one or more of the following features: face detection; body pose detection; body segmentation; eyes detection; facial landmarks.

14. The method according to any of the preceding claims, wherein the step of computing the calibration parameters further comprises the steps of:

computing a temporal series of eye movements events, among fixations, saccades and smooth pursuit events, as a function of said gaze estimate (g), and
computing the calibration parameters as a function of also said temporal series of eye movements events.

15. A tangible computer product containing program code for causing a processor to execute the method of one of the claims 1 to 14 when said code is executed on said processor.

**Fig. 1**

**Fig. 2**

**Fig. 3**

**Fig. 4**

**Fig. 5**

**Fig. 6**

Fig. 7

Fig. 8

Europäisches
Patentamt

European
Patent Office

Office européen
des brevets

# EUROPEAN SEARCH REPORT

Application Number

EP 21 18 2818

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUSUKE SUGANO ET AL: "Calibration-free gaze sensing using saliency maps", 2010 IEEE CONFERENCE ON COMPUTER VISION AND PATTERN RECOGNITION (CVPR), 13-18 JUNE 2010, SAN FRANCISCO, CA, USA, IEEE, PISCATAWAY, NJ, USA, 13 June 2010 (2010-06-13), pages 2667-2674, XP031725813, ISBN: 978-1-4244-6984-0 | 1-4,6,7, 9,10,13 | INV. H04N7/14 |
| Y | * abstract * * paragraphs [0001], [0002], [02.1], [02.2], [02.3], [02.4] * ----- | 5,11,12, 14 | |
| Y | CHENG YIHUA ET AL: "Appearance-Based Gaze Estimation via Evaluation-Guided Asymmetric Regression", 9 October 2018 (2018-10-09), ADVANCES IN BIOMETRICS : INTERNATIONAL CONFERENCE, ICB 2007, SEOUL, KOREA, AUGUST 27 - 29, 2007 ; PROCEEDINGS; [LECTURE NOTES IN COMPUTER SCIENCE; LECT.NOTES COMPUTER], SPRINGER, BERLIN, HEIDELBERG, PAGE(S) 105 - 121, XP047489370, ISBN: 978-3-540-74549-5 [retrieved on 2018-10-09] * the whole document * ----- | 14 | TECHNICAL FIELDS SEARCHED (IPC) H04N |
| Y | CHANG ZHUOQING ET AL: "SalGaze: Personalizing Gaze Estimation using Visual Saliency", 2019 IEEE/CVF INTERNATIONAL CONFERENCE ON COMPUTER VISION WORKSHOP (ICCVW), IEEE, 27 October 2019 (2019-10-27), pages 1169-1178, XP033732770, DOI: 10.1109/ICCVW.2019.00148 [retrieved on 2020-03-02] * paragraphs [inroduction], [0002], [03.2] * ----- -/-- | 5,11,12 | |

The present search report has been drawn up for all claims

| Place of search | Date of completion of the search | Examiner |
|---|---|---|
| Berlin | 3 December 2021 | Roche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HUANG MICHAEL XUELIN CSXHUANG@COMP POLYU EDU HK ET AL: "Building a Personalized, Auto-Calibrating Eye Tracker from User Interactions", USER INTERFACE SOFTWARE AND TECHNOLOGY, ACM, 2 PENN PLAZA, SUITE 701 NEW YORK NY 10121-0701 USA, 7 May 2016 (2016-05-07), pages 5169-5179, XP058519502, DOI: 10.1145/2858036.2858404 ISBN: 978-1-4503-4531-6 * the whole document * ----- | 1-15 | |

TECHNICAL FIELDS
SEARCHED      (IPC)

The present search report has been drawn up for all claims

| Place of search | Date of completion of the search | Examiner |
|---|---|---|
| Berlin | 3 December 2021 | Roche, Nicolas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020044180 A
- WO 2020208494 A

- WO 2014146199 A
- WO 2015192879 A

**Non-patent literature cited in the description**

- **GREER ; DUBNOV.** Restoring Eye Contact to the Virtual Classroom with Machine Learning. *Proceedings of the 13th International Conference on Computer Supported Education,* 2021

- **KRAFKA et al.** Eye Tracking for Everyone. *IEEE Conference on Computer Vision and Pattern Recognition (CVPR),* 2016